# EUROPEAN PATENT SPECIFICATION

(11) **EP 0 464 902 B1**
(45) Date of publication and mention of the grant of the patent: **20.12.1995**
(21) Application number: 91201568.2
(22) Date of filing: 20.06.1991
(51) Int. Cl.: G01N 21/17

(54) **Optoacoustic cell for measuring concentrations of chemical species in fluids in general**
Optoakustische Zelle zur Messung von Konzentrationen chemischer Stoffe in Flüssigkeiten im allgemeinen
Cellule optoacoustique pour mesurer des concentrations d'espèces chimiques en fluides en général

(30) Priority: 25.06.1990 IT 2075690
(43) Date of publication of application: 08.01.1992
(73) Proprietor: CISE- Centro Informazioni Studi Esperienze S.p.A., I-20123 Milano (IT)
(72) Inventor: Zanzottera,Eugenio, I-20010 Inveruno, Milan (IT); Carrer, Isabella, I-20050 Lesmo, Milan (IT); Fiorina, Lorenzo, I-28040 Lesa, Novara (IT)
(74) Representative: Fusina, Gerolamo

(56) References cited:
- EP-A- 0 131 654
- DE-C- 694 806
- US-A- 4 372 149
- US-A- 4 844 198
- PATENT ABSTRACTS OF JAPAN vol. 13, no. 524 (P-964) 22 November 1989, & JP-A- 01 214719

## Description

This invention relates to an optoacoustic cell for measuring concentrations of chemical species in fluids in general, in particular for measuring concentrations of gaseous contaminants or chemical species present in the atmosphere or in flue gas, or for determining chemical species present in liquids, even at trace level.

To conduct inspection of a solid substance in the atmosphere, a collecting apparatus of optoacoustic signal is known from Patent Abstracts of Japan, vol.13, no.524(P-964) of 22.11.1988 & JP-A-1214719, comprising a cell having a body with an inner cavity in the shape of a spheroid and with a cut off end part facing the solid substance to be inspected set on a stage outside the cell body. A microphone is positioned at one focal point of the cell body cavity and the incident point of an energy light beam made to fall on the surface of the solid substance to be inspected is positioned at the other focal point. By the incidence of the energy light beam on the solid substance an optoacoustic signal of substantially hemispheric waveform is generated, which is propagated inside the cell and then reflected by the inner surface of the cell to be concentrated on the microphone and to be collected by the same.

This known apparatus is only destined to conduct inspection of a solid substance set outside the cell, so that the operation for replacing the substance to be inspected is made easier.

For measuring concentrations of chemical species in fluids; as liquid or gaseous mixtures, an optoacoustic cell is also known in the art, consisting of a body with an inner cavity which is traversed by a light beam and by the fluid to be analyzed. The light beam is generated by a preferably pulsed light source, typically a laser, the light from which is made to pass through the cavity of the optoacoustic cell by means of suitable entry and exit apertures provided in the cell body. The light beam generally has a cylindrical symmetry, its wavelength being chosen to coincide with an absorption band of the chemical species to be detected.

The gaseous or liquid mixture to be analyzed is fed or poured into the cavity of the optoacoustic cell. If the chemical species to be determined is present in the cavity, light is absorbed proportional to its concentration. Part of the absorbed light energy is released to the mixture in the form of heat, hence generating an acoustic wave with an approximately cylindrical symmetry and wave front, which strongly depend on the spatial characteristics of the light beam used. The amplitude of the acoustic wave is proportional to the concentration of the chemical species. This acoustic wave amplitude is measured by one or more acoustic sensors, typically microphones. The proportionality factor of the acoustic wave amplitude to the chemical species concentration takes account of the physico-chemical characteristics of the mixture and the geometry of the acoustic determination.

The use of a pulse light source offers the advantage of being able to better discriminate the spurious signal generated by the apertures in the optoacoustic cell from the useful signal, as they can be separated in time.

However, as the optoacoustic cells used up to the present time generally have a cylindrical inner cavity, they have the serious limitation of low measurement sensitivity.

This means that the designer has to provide a high power laser and high sensitivity microphone, resulting in a very high overall equipment cost.

This low sensitivity is due to the fact that the microphone captures only a small part of the acoustic wave generated in the optoacoustic cell cavity.

The microphones normally used for gaseous mixtures are of capacitive type as these are the most sensitive. However in order to provide a good response at the high acoustic frequencies typical of this application, such capacitive microphones must be of very small dimensions compared with the dimensions of the optoacoustic cell and hence, as stated, capture only a small part of the acoustic wave generated in the cavity.

The microphones normally used for liquid mixtures are of piezoelectric type, their sensitivity being optimal for this application. These piezoelectric microphones are also normally of small dimensions and hence have the same drawbacks as stated heretofore.

Again, the sensitive area of the microphone could be increased in both cases, however a rule which is valid for every microphone states that increasing the sensitive area also increases the associated noise, hence it is instead generally convenient to reduce its dimensions.

A possible solution for increasing the capturing area for the acoustic signal is to use several microphones in parallel. The greater sensitivity thus obtained is however reduced by the overall increase in noise, the cost also being increased.

The object of the present invention is to provide an optoacoustic cell which overcomes the aforesaid drawbacks.

This object is attained according to the invention by an optoacoustic cell for measuring concentrations of chemical species in fluids in general, as defined in claim 1 or 2.

In both cases the optoacoustic cell has at least a particularly shaped wall enabling a cylindrical acoustic wave to be concentrated as a spherical wave or a flat wave onto a substantially punctiform region.

The characteristics and advantages of the present invention will be more apparent from the description of the two embodiments defined in claims 1 and 2, and illustrated on the accompanying drawings, in which:
Figure 1 is a perspective view of the first optoacoustic cell according to the invention;
Figure 2 is a section on the line II-II of the optoacoustic cell of Figure 1;
Figure 3 is a section on the line III-III of the optoacoustic cell of Figure 1;
Figure 4 is a perspective view of the second optoacoustic cell according to the invention;
Figure 5 is a section on the line V-V of the optoacoustic cell of Figure 4;
Figure 6 is a section on the line VI-VI of the optoacoustic cell of Figure 4; and
Figure 7 is a modification to the embodiment of Figure 4, in accordance with the section of Figure 6.

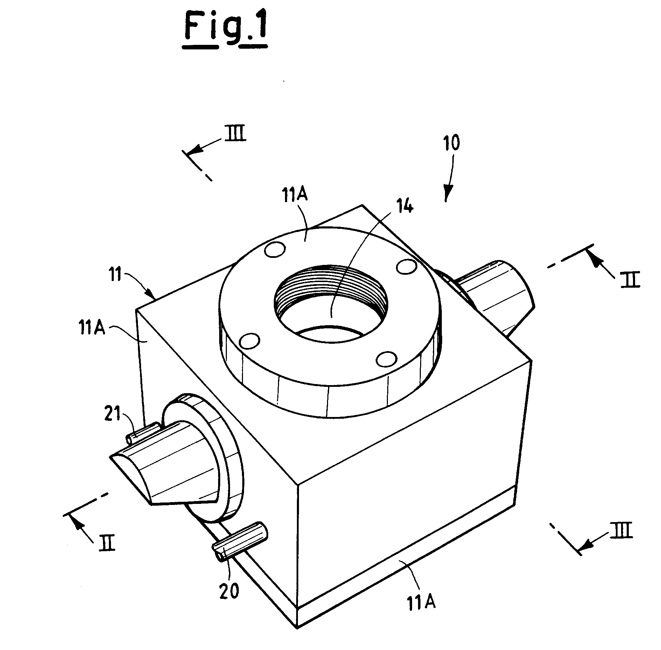

The optoacoustic cell of Figure 1, indicated overall by 10, comprises a body 11 which can be formed from elements 11A, for example of steel, fixed together by screws or by welding.

A cavity 12 is formed within the body 11. Two opposing aligned apertures 13 and a seat 14 are also formed in the body 11.

The apertures 13 enable a light beam 15 generated by an external pulsed light source such as a laser, not shown, to pass through the cavity 12.

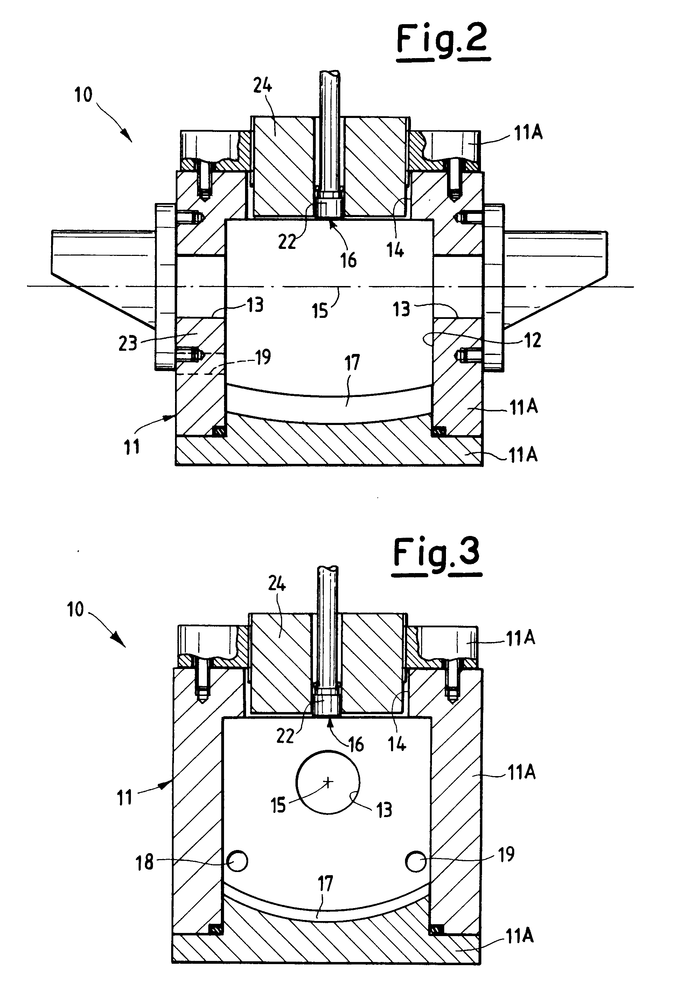

A bush 24 screwed into the seat 14 houses a microphone 22, visible only in Figures 2 and 3, the sensitive region 16 of which is in proximity to the cavity 12.

A wall 17 of the cavity 12 has a substantially toroidal configuration, ie has two different-radius curvatures in two mutually perpendicular planes such that for each point of the wall 17, the sum of the distances of the point from the centre of the sensitive region 16 of the microphone 22 and from the axis of the light beam 15 is constant.

In the body 11 there are provided two holes 18 and 19 which open into the cavity 12 and are connected to two respective external tubes 20 and 21 for the entry and exit of the fluid to be analyzed.

Using the described and illustrated optoacoustic cell 10, the concentrations of chemical species in fluids in general can be measured in the following manner.

The mixture containing the chemical species to be measured is fed into the cavity 12 of the cell 10 through the entry tube 20 and the hole 18, and out from it through the hole 19 and the exit tube 21.

At the same time, the light beam 15 generated by the laser, not shown, is fed into the cavity 12.

As explained in the introduction, the presence in the mixture of the chemical species to be measured results in light absorption proportional to its concentration. A part of the light energy absorbed is released into the mixture in the form of heat, to hence generate an acoustic wave of approximately cylindrical symmetry and wave front, which is propagated by the light beam.

Because of the presence of the wall 17 of toroidal configuration, this substantially cylindrical acoustic wave is reflected by said wall 17, which converts it from a cylindrical wave to a spherical wave, and concentrates it onto the centre of the sensitive region 16 of the microphone 22.

The microphone 22 then emits an electric signal proportional to the concentration of the chemical species to be measured, this signal then being processed by a data processing unit, not shown.

The wall 17 hence enables the entire acoustic wave incident on it from the light beam 15 to be conveyed onto the sensitive region 16 of the microphone 22.

In this manner, in contrast to the known art cited in the introduction, even with a small-dimension microphone a large part of the acoustic wave generated within the optoacoustic cell cavity can be captured.

There is thus the great advantage of high measurement sensitivity using a small-dimension microphone with advantages in terms of cost and noise minimization.

The cell 10 as described and illustrated can be used to measure concentrations of chemical species in both liquid and gaseous mixtures.

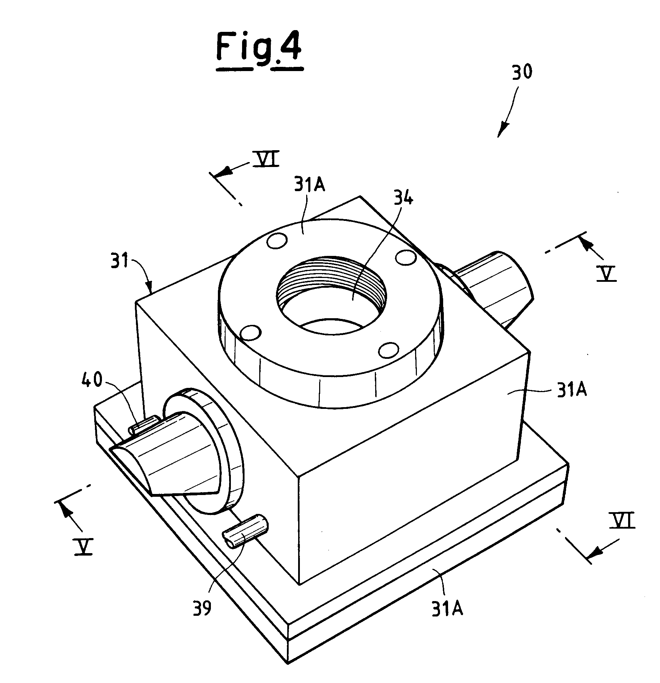

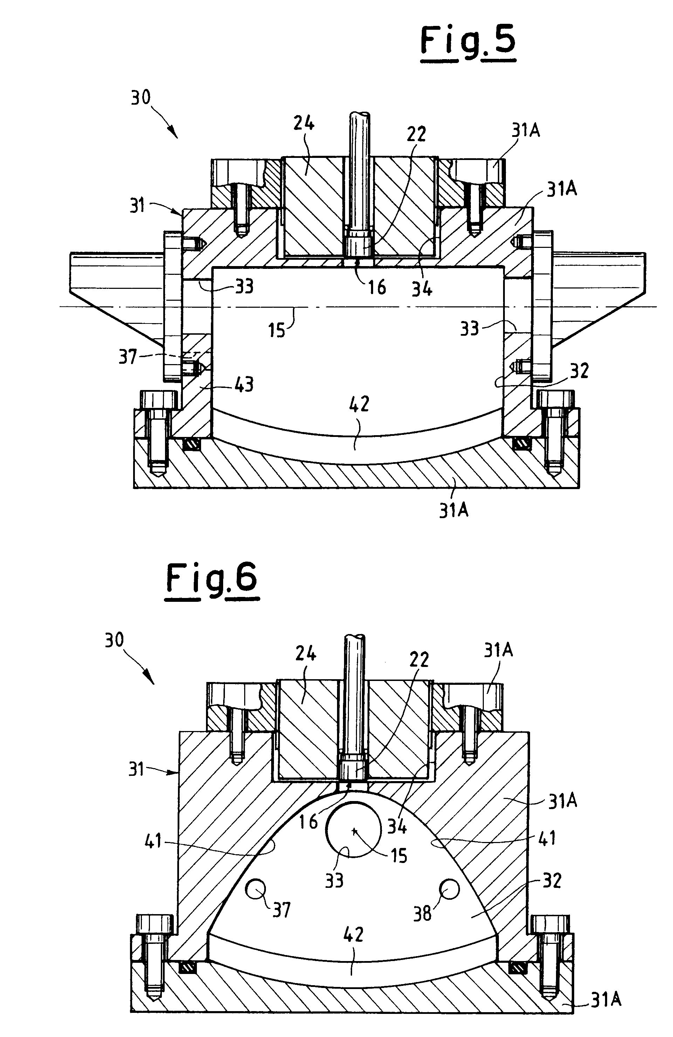

Figures 4, 5 and 6 show a second optoacoustic cell according to the invention, indicated overall by 30.

The cell 30 also comprises a body 31 formed from elements 31A, for example of steel, fixed together by screws or by welding. An inner cavity 32 is formed in the body 31, together with two opposing aligned apertures 33 for passage of the external light beam 15 through the cavity, and a seat 34 into which there is screwed the bush 24 carrying the microphone 22, the sensitive region 16 of which is in proximity to the cavity 32. In the body 31 there are also provided two holes 37 and 38, connected respectively to a fluid entry tube 39 and a fluid exit tube 40, allowing the mixture for analysis to flow into the cavity 32.

A first wall 41 of the cavity 32 is configured as a paraboloid of translation in which the focus is a straight line coinciding with the light beam 15.

A second wall 42 of the cavity 32 is configured as a paraboloid of revolution. The focus of this paraboloid is at the centre of the sensitive region 16 of the microphone 22.

In this case the cylindrical acoustic wave propagated by the light source 15 is converted into a flat wave by the wall 41 and is then focused onto the centre of the sensitive region 16 of the microphone 22 by the wall 42.

The advantages of this embodiment are identical to those already stated for the optoacoustic cell 10, deriving from the concentration of the acoustic wave propagated by the light beam 15 onto the sensitive region 16 of the microphone 22.

In both the described embodiments, each wall for conveying the acoustic wave is formed on one of the component elements of the cell, hence allowing precision machining which is at the same time economical.

In the two illustrated examples, the entry and exit holes for the fluid to be analyzed are provided in a cavity wall, indicated in the cell 10 by 23 and in the cell 30 by 43, which is different from the wall or walls which convey the acoustic wave onto the sensitive region of the microphone. This prevents a part of the acoustic wave reflected by said wall or walls which concentrate the acoustic wave from being absorbed by said holes and dispersing to cause a reduction in the cell sensitivity.

Housing the microphone in a bush screwed into a seat in the cell body enables the microphone position to be adjusted relative to the wall or walls which concentrate the acoustic wave, so as to set the sensitive part of the microphone at the point of concentration of the acoustic wave.

It is apparent that modifications and/or additions can be made to that described and illustrated.

In particular, the geometrical configuration of the internal walls of the optoacoustic cell can be different from that described and illustrated in the two examples. Such a geometrical configuration must however be such as to concentrate the acoustic wave developed within the cavity to be concentrated onto a substantially punctiform region coinciding with a sensitive region of an acoustic sensor. The term "substantially punctiform region" means a region of dimensions of the order of magnitude of the wavelength of the acoustic wave.

The housing for the acoustic sensor can also have a configuration different from the housings shown in the examples, depending obviously on the configuration of the acoustic sensor itself.

If the measurement of the concentration of the chemical species is static, ie if the mixture is introduced into the cavity of the optoacoustic cell and is then discharged from the cavity after the measurement has been made, the individual holes and respective pipes which in the case of dynamic measurement would have only one specific function, ie for entry or for exit of the mixture to be analyzed, can in the case of static measurement be used both for entry and exit of the mixture.

The number of holes can vary depending on the various requirements.

These holes, which connect the cavity to the outside of the cell for passage of the fluid to be analyzed, can be provided in any one or more walls of the cavity, provided they are not the reflecting walls which concentrate the acoustic wave onto the acoustic sensor.

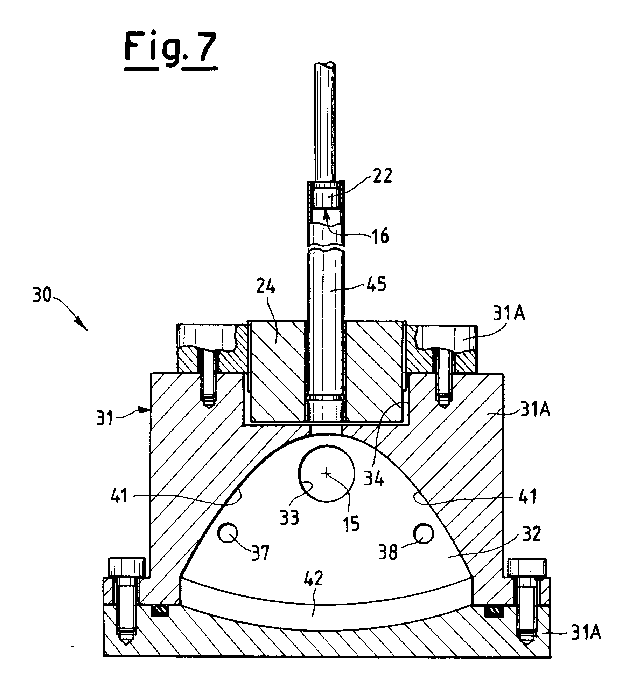

The acoustic wave can also be concentrated onto an acoustic waveguide which conveys the acoustic wave onto a microphone remote from the optoacoustic cell, for example if the microphone could be damaged by the fluid present in the cavity. One example of this is shown in Figure 7, in which with reference to the cell 30, there is inserted into the bush 24 a tube 45, for example of teflon or steel, onto one end of which the acoustic wave is concentrated and in the other end of which there is inserted the microphone 22. This can obviously also apply to the cell 10.

## Claims

1. An optoacoustic cell (10) for measuring concentrations of chemical species in fluids in general, comprising a body (11) with an inner cavity (12) to contain the fluid to be analysed and be traversed by a light bean (15) in order to generate within the cavity (12) an acoustic signal of amplitude proportional to the concentration of the chemical species to be measured, characterised in that at least one wall (17) of said cavity (12) has a substantially toroidal configuration such that for each point of said wall (17), the sum of the distances of the point from the centre of a substantially punctiform sensitive region (16) of an acoustic sensor (22) and from the axis of said light beam (15) is constant, in order to concentrate a cylindrical acoustic wave, coming from said fluid traversed by said light beam (15), onto said sensitive region (16).

2. An optoacoustic cell (30) for measuring concentrations of chemical species in fluids in general, comprising a body (31) with an inner cavity (32) to contain the fluid to be analysed and be traversed by a light beam (15) in order to generate within the cavity (32) an acoustic signal of amplitude proportional to the concentration of the chemical species to be measured, characterised in that a first wall (41) of said cavity (32) is configured as a paraboloid of translation in which the focus of the paraboloid is a straight line coinciding with said light beam (15), and a second wall (42) is configured as a paraboloid of rotation in which the focus of the paraboloid coincides with a point on a substantially punctiform sensitive region (16) of an acoustic sensor (22), in order to concentrate a cylindrical acoustic wave, coming from said fluid traversed by the light beam (15), onto said sensitive region (16).

3. An optoacoustic cell as claimed in claim 1 or 2, wherein in the body (11,31) of the optoacoustic cell (10,30) there is provided a seat (14,34) into which there is screwed a bush (24) housing an acoustic sensor (22) in a position such that it captures the acoustic wave concentrated onto it.

4. An optoacoustic cell as claimed in claim 1 or 2, in which at least one further (23,43) wall of said cavity (12,32) is provided, said further wall comprising holes (18,19;37,38) which connect the cavity (12,32) to the outside of the optoacoustic cell for the passage of the fluid to be analyzed.

5. An optoacoustic cell as claimed in claim 1 or 2, wherein said body (11,31) is formed from a series of elements (11A,31A) fixed together, at least one of which is shaped to form the wall or walls for concentrating the acoustic wave.

6. An optoacoustic cell as claimed in claim 1 or 2, wherein a wave guide (45) is provided between the cavity (32) and the acoustic sensor (22) to provide remote acoustic connection between them.

7. An optoacoustic cell as claimed in claim 6, wherein said waveguide is a tube (45).

8. An optoacoustic cell as claimed in claim 7, comprising in the body (31) of the optoacoustic cell (30) a seat (34) into which there is screwed a bush (24) housing a portion of said tube (45), one end of said tube being in proximity to said cavity (32), the acoustic sensor (22) being inserted into the other end of said tube (45).

## Patentansprüche

1. Optoakustische Zelle (10) zum Messen der Konzentrationen von chemischen Spezies in Fluiden allgemein, umfassend einen Hauptteil (11) mit einem inneren Hohlraum (12) zum Enthalten des zu analysierenden Fluids und zum Durchquertwerden von einem Lichtbündel (15), um innerhalb des Hohlraums (12) ein akustisches Signal von einer Amplitude zu erzeugen, die proportional der Konzentration der zu messenden chemischen Spezies ist, dadurch **gekennzeichnet,** daß wenigstens eine Wand (17) des Hohlraums (12) eine im wesentlichen toroidale Konfiguration derart hat, daß für jeden Punkt der Wand (17) die Summe der Entfernungen des Punkts von dem Zentrum eines im wesentlichen punktförmigen empfindlichen Bereichs (16) eines akustischen Sensors (22) und von der Achse des Lichtbündels (15) konstant ist, um eine zylindrische Akustikwelle, die von dem mittels des Lichtbündels (15) durchquerten Fluid kommt, auf den empfindlichen Bereich (16) zu konzentrieren.

2. Optoakustische Zelle (30) zum Messen der Konzentrationen von chemischen Spezies in Fluiden allgemein, umfassend einen Hauptteil (31) mit einem inneren Kohlraum (32) zum Enthalten des zu analysierenden Fluids und zum Durchquertwerden von einem Lichtbündel (15), um innerhalb des Hohlraums (32) ein akustisches Signal von einer Amplitude zu erzeugen, die proportional der Konzentration der zu messenden chemischen Spezies ist, dadurch **gekennzeichnet,** daß eine erste Wand (41) des Hohlraums (32) als ein Translationsparaboloid konfiguriert ist, in welchem der Fokus des Paraboloids eine gerade Linie ist, die mit dem Lichtbündel (15) zusammenfällt bzw. übereinstimmt, und eine zweite Wand (42) als ein Rotationsparaboloid konfiguriert ist, in welchem der Fokus des Paraboloids mit einem Punkt auf bzw. in einem im wesentlichen punktförmigen empfindlichen Bereich (16) eines akustischen Sensors (22) zusammenfällt bzw. übereinstimmt, um eine zylindrische Akustikwelle, die von dem mittels des Lichtbündels (15) durchquerten Fluid kommt, auf den empfindlichen Bereich (16) zu konzentrieren.

3. Optoakustische Zelle nach Anspruch 1 oder 2, worin in dem Hauptteil (11, 31) der optoakustischen Zelle (10, 30) ein Sitz (14, 34) vorgesehen ist, in welchen eine Buchse (24) geschraubt ist, die einen akustischen Sensor (22) in einer Position derart enthält, daß er die auf ihn konzentrierte akustische Welle auffängt.

4. Optoakustische Zelle nach Anspruch 1 oder 2, worin wenigstens eine weitere (23, 43) Wand des Kohlraums (12, 32) vorgesehen ist, wobei die weitere Wand Löcher (10, 19; 37, 38) umfaßt, welche den Hohlraum (12, 32) für den Durchgang des zu analysierenden Fluids mit dem Äußeren der optoakustischen Zelle verbinden.

5. Optoakustische Zelle nach Anspruch 1 oder 2, worin der Hauptteil (11, 31) aus einer Reihe von Elementen (11A, 31A) ausgebildet ist, die aneinander befestigt sind, wobei wenigstens eines derselben so gestaltet ist, daß es die Wand oder Wände zum konzentrieren der Akustikwelle bildet.

6. Optoakustische Zelle nach Anspruch 1 oder 2, worin ein Wellenleiter (45) zwischen dem Hohlraum (32) und dem akustischen Sensor (22) zum Vorsehen einer akustischen Fernverbindung zwischen ihnen vorgesehen ist.

7. Optoakustische Zelle nach Anspruch 6, worin der Wellenleiter ein Rohr (45) ist.

8. Optoakustische Zelle nach Anspruch 7, umfassend in dem Hauptteil (31) der optoakustischen Zelle (30) einen Sitz (34), in welchen eine Buchse (24) geschraubt ist, die einen Teil des Rohrs (45) erhält, wobei ein Ende des Rohrs in der Nähe des Hohlraums (32) ist, wobei der akustische Sensor (22) in das andere Ende des Rohrs (45) eingefügt ist.

## Revendications

1. Cellule optoacoustique (10) pour mesurer des concentrations en espèces chimiques dans des fluides en général, comprenant un corps (11) avec une cavité interne (12) destiné à contenir un fluide à analyser et à faire traverser par un rayon lumineux (15) afin de générer dans la cavité (12) un signal acoustique d'amplitude proportionnelle à la concentration des espèces chimiques à mesurer, caractérisée en ce qu'au moins une paroi (17) de ladite cavité (12) a une configuration substantiellement toroïdale telle que, pour chaque point de ladite paroi (17), la somme des distances du point au centre d'un région sensible substantiellement ponctuelle (16) d'un capteur acoustique (22) et à l'axe dudit rayon lumineux (15) est constante, afin de concentrer sur ladite région sensible (16) une onde acoustique cylindrique venant dudit fluide traversé par ledit rayon lumineux (15).

2. Cellule optoacoustique (30) pour mesurer des concentrations en espèces chimiques dans des fluides en général, comprenant un corps (31) avec une cavité interne (32) destiné à contenir un fluide à analyser et à faire traverser par un rayon lumineux (15) afin de générer dans la cavité (32) un signal acoustique d'amplitude proportionnelle à la concentration des espèces chimiques à mesurer, caractérisée en ce qu'une première paroi (41) de ladite cavité (32) est configurée en un paraboloïde de translation dans lequel le foyer du paraboloïde est une ligne droite coïncidant avec ledit rayon lumineux (15), et une deuxième paroi (42) est configurée en un paraboloïde de rotation dans lequel le foyer dudit paraboloïde coïncide avec un point sur une région sensible substantiellement ponctuelle (16) d'un capteur acoustique (22) afin de concentrer sur ladite région sensible (16) une onde acoustique cylindrique venant dudit fluide traversé par ledit rayon lumineux (15).

3. Cellule optoacoustique selon la revendication 1 ou 2, dans laquelle, dans le corps (11, 31) de la cellule optoacoustique (10, 30), il et prêvu un siège (14, 34) dans lequel est vissée une douille (24) recevant un capteur acoustique (22) en une position telle qu'il capture l'onde acoustique concentrée sur lui.

4. Cellule optoacoustique selon la revendication 1 ou 2, dans laquelle au moins une autre paroi (23, 43) de ladite cavité (12, 32) est prévue, ladite autre paroi comprenant des trous (18, 19 ; 37, 38) qui relient la cavité (12, 32) à l'extérieur de la cellule optoacoustique pour le passage du fluide à analyser.

5. Cellule optoacoustique selon la revendication 1 ou 2, dans laquelle ledit corps (11, 31) est formé d'une série d'éléments (11A, 31A) fixés ensemble, dont au moins l'un est formé pour constituer la ou les parois destinées à concentrer l'onde acoustique.

6. Cellule optoacoustique selon la revendication 1 ou 2, dans laquelle un guide d'onde (45) est prévu entre la cavité (32) et le capteur acoustique (22) pour favoriser la liaison acoustique à distance entre eux.

7. Cellule optoacoustique selon la revendication 6, dans laquelle ledit guide d'onde (45) est un tube.

8. Cellule optoacoustique selon la revendication 7, comprenant dans le corps (31) de la cellule optoacoustique (30) un siège (34) dans lequel est vissée une douille (24) recevant une partie dudit tube (45), une extrémité dudit tube étant à proximité de ladite cavité (32), le capteur acoustique (22) étant inséré dans l'autre extrémité dudit tube (45).
